# EUROPEAN PATENT SPECIFICATION

(11) **EP 2 144 765 B1**
(45) Date of publication and mention of the grant of the patent: **18.07.2012**
(21) Application number: 07761106.9
(22) Date of filing: 23.04.2007
(51) Int. Cl.: C08L 7/00, C08L 21/00, B60C 1/00, B60C 11/02, B29C 73/02, B29D 30/54, C08L 57/02

(54) **USE OF RUBBER RETREADING FORMULATION**
VERWENDUNG EINER KAUTSCHUKRUNDERNEUERUNGSFORMULIERUNG
UTILISATION D'UNE FORMULATION DE RECHAPAGE DE CAOUTCHOUC

(43) Date of publication of application: 20.01.2010
(60) Divisional application: 12153720.3
(73) Proprietor: Société de Technologie MICHELIN, 63000 Clermont-Ferrand (FR); MICHELIN Recherche et Technique S.A., 1763 Granges-Paccot (CH)
(72) Inventor: HETZEL, Peter, D., Greer, SC 29651 (US)
(74) Representative: Neugebauer, Jürgen
(86) International application number: PCT/US2007/067199
(87) International publication number: WO 2008/133676

(56) References cited:
- WO-A1-2004/013221
- WO-A2-2006/047509
- FR-A1- 2 877 348
- US-A- 4 157 363
- US-A- 4 471 094
- US-B1- 6 265 478

## Description

### BACKGROUND OF THE INVENTION

### Field of the Invention

This invention relates generally to the use of rubber compositions and more specifically, to rubber compositions useful for repairing and retreading tires.

### Description of the Related Art

The market for retreaded pneumatic tires is almost entirely the trucking market. In the trucking market, the carcass of a tire is expected to last several hundred thousand miles and be amenable to having a new tread adhered to it several times. New truck tires are quite expensive and are therefore bought with the expectation that their high initial costs are offset by the long service life of the carcass and the low comparative cost of retreading.

A variety of procedures and different types of equipment are available for use in recapping or retreading pneumatic tires. One of the first steps in retreading a worn tire is to remove existing tread material from the tire carcass by a sanding procedure known as buffing. Next a layer of what is know as "cushion gum" is applied to the carcass. This layer of extruded uncured rubber may be stitched or adhesively bonded to the carcass. Next, a tread layer is applied atop the layer of cushion gum.

In the cold recapping process, the tread is cured rubber and has a tread pattern already impressed in its outer surface. The tire is then placed in an autoclave and heated under pressure for an appropriate time to induce curing of the gum layer, thereby binding the gum layer to the tread and the carcass to secure the tread in place.

In the hot recapping process, the tread is uncured rubber that has no tread pattern. The tire is then placed in a tire mold and heated under pressure for an appropriate time to cure the gum layer and the tread, thereby binding the gum layer to the tread and the carcass to secure the tread in place. The term "cure" refers to the formation of cross-links between the elastomer molecules in the rubber compound.

It is known from document WO 2004/013221, a crosslinked or crosslinkable rubber composition used for constructing a pneumatic tyre thread, which exhibits an improved tear resistance, and to a pneumatic tyre cover comprising said pneumatic tyre thread. The rubber composition contains a plasticising resin with an average molecular mass ranging from 400 to 2000 g/mol, with a vitreous transition temperature between 50°C and 120°C and which contains units resulting from the polymerisation of unsaturated monocyclic or bicyclic terpene according to a mass fraction ranging from 70 % to 100 %.

It is also known from document FR 2 877 348, a rubber composition (A) comprises a dienic elastomer, a reinforcing agent, a plasticizing system comprising 5-35 wt.% of a medium extracted solvate (MES) or treated distillate aromatic extract (TDAE) oils and 5-35 wt.% of resin of a C5 fraction/vinylaromatic copolymer and a crosslinking system.

### SUMMARY OF THE INVENTION

Particular embodiments of the present invention include methods of use of diene rubber compositions having a plasticizing hydrocarbon resin, and articles containing such diene rubber compositions.

One embodiment includes the use of a cushion gum of bonding a tire tread to a tire carcass, the cushion gum having a diene rubber and between 5 and 60 phr (parts per hundred parts rubber by weight) of a plasticizing hydrocarbon resin having a glass transition temperature greater than about 20 °C and a number average molecular weight less than 2000. The glass transition temperature may be greater than 60°C or even greater than 70 °C in particular embodiments. The cushion gum may comprise between 10 and 30 phr of the resin in particular embodiments.

The plasticizing resin may be a terpene resin comprising units resulting from the polymerization of limonene, alpha pinene, beta pinene or combinations thereof: homopolymers or copolymers of cyclopentadiene (CPD) or dicyclopentadiene (DCPD), homopolymers or copolymers of terpene, homopolymers or copolymers of a C₅ cut and mixtures thereof; and/or copolymers of (D)CPD/ vinyl-aromatic, of (D)CPD/ terpene, of (D)CPD/ C₅ cut, of terpene /vinyl-aromatic, of C₅ cut / vinyl-aromatic and of combinations thereof.

Particular embodiment of the present invention further include methods for bonding a tread to a tire comprising the steps of applying any of the cushion gums having the plasticizing hydrocarbon resins described above to a bonding surface of a tread band, to an outer bonding surface of a tire carcass or combinations thereof.

Particular embodiments of the present invention include a tire having a tread bonded thereto using the method described above for bonding a tire tread to a tire carcass.

Particular embodiments of the present invention include a rubber-based adhesive and methods for its use for bonding a patch to a rubber article, the rubber-based adhesive being any of the rubber compositions having the plasticizing hydrocarbon resins described above.

The foregoing and other object, features and advantages of the invention will be apparent from the following more detailed descriptions of particular embodiments of the invention.

### DETAILED DESCRIPTION OF PARTICULAR EMBODIMENTS

Particular embodiments of the present invention include the use of a cushion gum for bonding the tread of a tire to a tire carcass. Other embodiments include, for example, a rubber-based adhesive for bonding a repair patch to the interior of a tire. The rubber composition may be in an uncured or cured form; e.g., a retreaded tire has a tread that is suitably bonded to the tire carcass only after the cushion gum layer between the tread and the carcass has been cured.

A first embodiment of the present invention includes the use of a cushion gum that is useful for bonding a tire tread to a tire carcass. While typically the bonding of a tire tread to a tire carcass is part of a retreading process, the invention may be suitably used for bonding a tread to a new tire carcass. The cushion gum includes a diene rubber and a plasticizing hydrocarbon resin. A plasticizing hydrocarbon resin is a hydrocarbon compound that is solid at ambient temperature (*e.g*., 23°C) as opposed to a liquid plasticizing compound, such as a plasticizing oil. Additionally a plasticizing hydrocarbon resin is compatible, *i.e*., miscible, with the rubber composition with which the resin is mixed at a concentration that allows the resin to act as a true thinning agent, *e.g*., at a concentration that is typically at least 5 phr (parts per hundred parts rubber by weight).

Plasticizing hydrocarbon resins are polymers that can be aliphatic, aromatic or combinations of these types, meaning that the polymeric base of the resin may be formed from aliphatic and/or aromatic monomers. These resins can be natural or synthetic materials and can be petroleum based or not, in which case the resins may be called petroleum plasticizing resins. In particular embodiments, although not limiting the invention, these resins may contain essentially only hydrogen and carbon atoms.

Particular embodiments of the presenting invention include the use of a plasticizing hydrocarbon resin that includes at least one, if not all, of the following physical characteristics: a glass transition temperature (Tg) greater than 20 °C, a number average molecular weight (Mn) of between 400 and 2000 g/mole and/or a polydispersity index (Ip) of less than 3, wherein the polydispersity index Ip = Mw/Mn, wherein Mw is the weight average molecular weight. Other embodiments may use a plasticizing hydrocarbon resin that includes at least one of the following physical characteristics: a Tg greater than 30 °C, a number average molecular weight of between 500 and 1500 g/mole and/or a polydispersity index of less than 2. Still other embodiments may use a resin having a Tg greater than about 50 °C, 60 °C or even above 70°C.

Tg is measured in a known way by a differential scanning calorimeter according to ASTM D3418 (1999). Additionally, the macrostructure (Mw, Mn and Ip) of the plasticizing hydrocarbon resin may be determined by size exclusion chromatography (SEC). Size exclusion chromatography makes it possible physically to separate macromolecules according to their size in the swollen state in columns filled with a porous stationary phase. The macromolecules are separated by their hydrodynamic volume, the bulkiest being eluted first. Although not an absolute method, SEC does enable an assessment to be made of the molecular weight distribution of the resins.

An acceptable SEC method includes solubilizing a sample of the resin in tetrahydrofuran, at a concentration of about 1 g/l. The apparatus used is a chromatograph "WATERS model Alliance 2690". The elution solvent is tetrahydrofuran (mobile phase), the flow rate is 1 ml/min., the temperature of the system is 35 °C and the duration of analysis is 40 mm. A set of three columns in series, having the respective trade names "WATERS type STYRAGEL HR4E" (mixed-bed column), "WATERS type STYRAGEL HR1" (of a porosity of 100 Angstrom) and "WATERS STYRAGEL HR0.5" (of a porosity of 50 Angstrom) is used for the stationary phase. The injected volume of the solution of each resin sample is 100 µl. The detector is a "WATERS model 2410" differential refractometer and the chromatographic data processing software is the "WATERS MILLENNIUM" (version 3-2) system.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

The term "C₅ cut" or, for example, "C₈ to C₁₀ cut", as used herein is understood to mean any fraction taken from a petrochemical process or from a petroleum refining process, e.g., any distillation fraction predominantly comprising compounds having 5 (or respectively 8 to 10 in the case of a C₈ to C₁₀ cut) carbon atoms. These cuts or fractions may be obtained by any chemical process known in the petroleum or petrochemical industry. Non-limiting examples may include processes for the steam cracking of naphtha or the fluid catalytic cracking of feedstocks for gasoline production, including combining such processes with any possible chemical treatment for the conversion of these fractions such as hydrogenation and dehydrogenation.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (levorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chlorostyrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, C₅ cut/ styrene copolymer resins, C₅ cut/C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932, a softening point of about 135°C and a glass transition temperature of about 91 °C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72 °C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125°C, and has a glass transition temperature of about 73°C while the SYLVARES TR 5147 has a molecular weight of about 945, a softening point of about 120 °C and has a glass transition temperature of about 71°C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WTNGTACK EXTRA; from Kolon under names HIKOREZ T1095 and HIKOREZ T1100; and from Exxon under names ESCOREZ 2101 and ECR 373.

Yet other suitable plasticizing hydrocarbon resins that are limonene/styrene copolymer resins that are commercially available include DERCOLYTE TS 105 from DRT of France; and from Arizona Chemical Company under the name ZTH5LT and ZT5100.

The plasticizing hydrocarbon resins, for example a terpene resin, are present in the cushion gum and other rubber compositions included in the present invention for various reasons that include, for example, without limiting the invention, improving the processability of the composition by lowering the viscosity of the composition and replacing at least a portion of the plasticizing oil typically found in compositions suitable for use as a cushion gum, and rubber-based adhesives that may be used on or with tires and other rubber articles. Surprisingly, the use of a plasticizing hydrocarbon resin such as, for example, the terpene resin in the cushion gum composition has provided a low viscosity rubber composition that provides much improved physical characteristics including tear strength, faulted fatigue strength and resistance to fatigue crack propagation. Advantageously and quite surprisingly, these improved physical characteristics are obtained in rubber compositions having a reduced amount of plasticizing oil.

Particular embodiments of the present invention that include the cushion gum, all have viscosities of between 15 and 50 Mooney (1+4) at 100 °C.

Particular embodiments of the present invention include a terpene resin that has a relatively high glass transition temperature. For example, the glass transition temperature of the terpene resin may be greater than about 50°C, and may be greater than about 60°C, or even greater than about 70°C.

The terpene resin, or other plasticizing hydrocarbon resin should further have a softening point that is compatible with the processing of the other materials contained in the composition. For example, when forming an elastomer composition suitable for use as a cushion gum or repair material, the terpene resin is mixed, heated, and melted with the other components in the composition. Thus, the plasticizing hydrocarbon resin should have a softening point that is less than the temperature at which other ingredients in the composition, such as the elastomer, begin to degrade and break down and should further be less than the temperature at which the mix will be dropped to ensure adequate mixing. Although not meant to limit the invention, a typical maximum softening point for use in the rubber compositions may be about 170 °C. Other embodiments may include a plasticizing hydrocarbon resin, including terpene resins, having a softening point of between 90 and 150 °C or between 110 and 130 °C. As used herein, the softening point is determined by the "Ring and Ball" method such as described in ASTM E-28.

The amount of plasticizing hydrocarbon resin useful in any particular embodiment of the present invention depends upon the particular circumstances and the desired result. In general, for example, the plasticizing hydrocarbon resin may be present in the composition in an amount between about 5 and about 60 phr or alternatively, between about 5 and about 30 phr. For instance, in one embodiment, the resin may be present in the composition in an amount between about 5 phr and about 20 phr, in another between about 5 and about 40 phr and in another, between about 10 and about 30 phr or between about 10 and about 60 phr.

The diene rubber elastomers that are suitable for use in embodiments of the present invention are understood to be those elastomers resulting at least in part, *i.e*., a homopolymer or a copolymer, from diene monomers, *i.e*., monomers having two double carbon-carbon bonds, whether conjugated or not.

Particular embodiments of the present invention use essentially unsaturated diene elastomers, which is understood herein to mean diene elastomers resulting at least in part from conjugated diene monomers, having a content of member or units of diene origin (conjugated dienes) that is greater than 15 mol. %. Within the category of essentially unsaturated diene elastomers, highly unsaturated diene elastomers is understood to mean herein diene elastomers having a content of units of diene origin (conjugated diene) that is greater than 50 mol. %.

Examples of suitable dienes include polybutadienes, polyisoprenes, natural rubber, butadiene copolymers, isoprene copolymers and mixtures thereof. Suitable copolymers include, for example, butadiene-styrene copolymers, butadiene-isoprene copolymers, isoprene-styrene copolymers, isoprene-butadiene-styrenc copolymers.

Particular embodiment of the present invention may contain single diene elastomer or a mixture of several diene elastomers, the diene elastomer or elastomers possibly being used in association with any type of synthetic elastomer other than a diene elastomer, or even with polymers other than elastomers, for example thermoplastic polymers.

Particular embodiments of the present invention useful as the cushion gum or the rubber-based adhesive for bonding a patch to a rubber article may comprise between 80 and 100 phr natural rubber and between 0 and 20 phr synthetic rubber. The synthetic rubber is typically elected, though not meant to limit the invention, from polybutadiene, styrenebutadiene rubber or combinations thereof.

Particular embodiments of the present invention that arc rubber compositions useful as a cushion gum, rubber-based adhesive and other rubber compositions that include the plasticizing hydrocarbon resin may further include reinforcement fillers such as carbon black, so-called white, or inorganic fillers or combinations thereof. The white or inorganic filler used as reinforcing filler may constitute all or only part of the total reinforcing filler, in this latter case associated, for example, with carbon black.

In the present application, "reinforcing inorganic filler", in known manner, is understood to mean an inorganic or mineral filler, whatever its color and its origin (natural or synthetic), also referred to as "white" filler or sometimes "clear" filler in contrast to carbon black. This inorganic filler is capable, on its own, without any means other than an intermediate coupling agent, of reinforcing a rubber composition intended for the manufacture of tires; *i.e*., is capable of replacing all or at least a portion ofa conventional tire-grade carbon black filler in its reinforcement function.

The reinforcing inorganic filler may be a mineral filler of the siliceous or aluminous type, or a mixture of these two types of fillers. The physical state in which the reinforcing inorganic filler is present may be, for example, without limiting the invention, in the form of a powder, micro-beads, granules, balls or combinations thereof. Of course, "reinforcing inorganic filler" is also understood to mean mixtures of different reinforcing inorganic fillers, in particular of highly dispersible siliceous and/or aluminous fillers.

As noted above, carbon black may be used alone or in combination with the inorganic fillers Any carbon black is useful for the rubber compositions or the present invention as long as it is suitable for the particular application. Suitable carbon blacks that may be used in particular embodiments of the present invention include the blacks of the type IIAF, ISAF and SAF, which are conventionally used in tires, and particularly in treads for these tires. As non-limitative examples of such blacks, mention may be made of the blacks N115, N134, N234, N339, N347, N375, and the 600 series, including, but not limited to, N630, N650 and N660. The amount of carbon black present in the total reinforcing filler may vary within wide limits, *e.g*., between 5 and 100 phr or between 20 and 80 phr or between 30 and 70 phr. Alternatively, as well known in the art, the carbon black may be added to the rubber composition without the addition of an inorganic reinforcing filler.

In addition to the rubber elastomer and reinforcement filler, particular embodiment of the rubber composition may further include all or part of the additives that may typically be used in rubber compositions intended for use as cushion gum, rubber-based adhesive or other rubber-containing articles. Such additives may include, for example, plasticizers, extender oils, pigments, protective agents that include antioxidants and antiozonants. For embodiments that include uncured materials, the rubber composition may further include a cross-linking system based either on sulphur or on sulphur and/or peroxide and/or bismaleimide donors, vulcanization accelerators, vulcanization activators, and so forth. There may also be associated with the reinforcing inorganic filler, if necessary, a conventional non-reinforcing white filler, such as for example particles of clay, bentonite, talc, chalk, kaolin or titanium oxides.

Particular embodiments of the rubber composition may include at least one plasticizing oil extracted from petroleum of for example, paraffinic, aromatic or naphthenic type, in a quantity of between 0 phr and 60 phr or alternatively between 0 phr and 35 phr or between 0 and 30 phr or between 0 and 20 phr or between 0 and 15 phr or between 0 and 10 phr. Advantageously, the rubber composition may be totally devoid of the plasticizing oil extracted from petroleum.

The rubber compositions that are embodiments of the present invention are produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120°C and 190°C, more narrowly between 130°C and 160°C, is reached.

This first phase may itself comprise a single or several thermo-mechanical working stages, separated for example by one or more intermediate cooling stages. The various ingredients of the composition, elastomer(s), the plasticizing hydrocarbon resin, reinforcing filler and its coupling agent, and the various other components ("additives") may be incorporated in the mixer in one or more steps, either during the first thermo-mechanical stage, or staggered during the various thermo-mechanical stages, if applicable. The total duration of this thermo-mechanical working (typically between 1 and 20 minutes, for example between 2 and 8 minutes) is selected according to the specific operating conditions, in particular the maximum temperature selected, the nature and volume of the constituents, the important thing being that a good dispersion of the various ingredients which inter-react is obtained in the elastomeric matrix, thus permitting firstly good processing of the composition in the uncured state, then a sufficient level of reinforcement, after curing, by the reinforcing filler and its intermediate coupling agent.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature (typically less than 120°C, for example between 60°C and 100°C), in all cases lower than the vulcanization temperature of the mixture, so as to protect against premature vulcanization (scorching). The second stage of mixing may be done on either a mill or a Banbury mixer. The rubber compound according to the invention can be incorporated in the rubber composition in either the first or the second stage of mixing.

Particular embodiments of the present invention include the rubber compositions and articles made therefrom in both the "uncured" state (*i.e*., before curing) and in the "cured" or vulcanized state (*i.e*., after cross-linking or vulcanization).

The invention is further illustrated by the following examples, which are to be regarded only as illustrations and not delimitative of the invention in any way. The properties of the compositions disclosed in the examples were evaluated as described below.

Mooney Plasticity (ML 1+4): Mooney Plasticity is measured in accordance with ASTM Standard D 1646-04. In general, the composition in an uncured state is molded in a cylindrical enclosure and heated to 100°C. After 1 minute of preheating, the rotor turns within the test sample at 2 rpm, and the torque used for maintaining this movement is measured after 4 minutes of rotation. The Mooney Plasticity is expressed in "Mooney units" (MU, with 1 MU = 0.83 Newton-meter).

Tear Strength: To determine the tear strength, test samples were cut from a cured plaque with a thickness of approximately 2.5 mm. Notches (perpendicular to the test direction) were created in the samples prior to testing. The force and elongation at break was measured using an Instron 5565 Uniaxial Testing System. The cross-head speed was 500 mm/min. Samples were tested at ambient and at 60 °C and at 100°C. The results were calculated as the tear strength index being equal to force at rupture (MPa) * elongation at break (%). The higher the index for a material, the less susceptible is the material to tearing.

Faulted Fatigue: Cyclic faulted fatigue testing was conducted on the cured test samples that were rectangular shaped, 65 mm x 10 mm. A 1 mm fault was cut in the center of the test sample prior to testing. The test was conducted at ambient temperature by imposing cyclic strain from between 0% and 60% on the test pieces. The total number of cycles to failure was recorded for each test sample as the measurement of faulted fatigue.

Fatigue Crack Propagation: Cyclic fatigue crack propagation testing was conducted on the cured samples. The test pieces had a large width to height ratio of about 12 to provide nearly pure shear sample geometry. The experimental system included an MTS 831 Elastomer Test System load frame, a hydraulic power unit, an environmental chamber surrounding the sample holder, a digital oscilloscope to monitor stress and strain data and an optical microscope to measure crack lengths. During testing, the samples were solicited using a haversine shaped wave form. Initially, an accommodated sample was solicited at all strain levels of interest to generate load versus strain data. This data was used to determine the strain energy release rate at each strain level of interest. Next, cuts were made along the centerline of the test sample. The lengths of these cuts were monitored during solicitation to determine the average crack growth rates. These rates are reported for each sample.

The following references are useful for information on fatigue crack propagation: 1) D.G. Young, "Dynamic Property and Fatigue Crack Propagation Research on Tire Sidewall and Model Compounds," Rubber Chemistry and Technology, 58, 785 (1985) and 2) D. G. Young, "Application of Fatigue Methods Based on Fracture Mechanics for Tire Compound Development," Rubber Chemistry and Technology, 63, 567 (1990).

### Example 1

Elastomer formulation were prepared using the components shown in Table **1** and using procedures well known to one having ordinary skill in the art. The amount of each component making up the elastomer formulations shown in Table **1** are provided in parts per hundred parts rubber by weight (phr) of the elastomer. The carbon black was N347. The terpene resin used was SYLVARES TR-5147, a polylimonene resin available from Arizona Chemical, Savannah, GA. The oil was naphthenic.

The elastomer formulations were prepared by mixing the components given in Table **1**, except for the sulfur and the accelerators, in a Banbury mixer operating at 55-65 RPM until a temperature of between 155 and 170 °C was reached. The sulfur and accelerators were added on the mill. Vulcanization was effected at 125 °C for 40 minutes. The formulations were then tested to measure their physical properties.

**Table 1- Physical Properties of Rubber Composition having Resin**

| **Elastomer Composition** | **Witness** | **E1** |
|---|---|---|
| Natural Rubber | 100 | 100 |
| Carbon Black N347, phr | 55 | 55 |
| Oil, phr | 30 | 15 |
| Terpene Resin, phr | 0 | 15 |
| Zinc Oxide, phr | 5 | 5 |
| Stearic Acid, phr | 1 | 1 |
| nti-degradants, phr | 3 | 3 |
| Sulfur, phr | 2.8 | 2.8 |
| Tackifying resin, phr | 3 | 3 |
| Accelerators, phr | 1.9 | 1.9 |

| **Measured Properties** | | |
|---|---|---|
| Tear Strength Index, (ambient) | 182 | 299 |
| Tear Strength Index, (60 °C) | 100 | 166 |
| Tear Strength Index, (100 °C) | 94 | 121 |
| Faulted Fatigue, cycles to failure | 132,658 | 161,375 |
| Fatigue Crack Propagation Rate @ 400 J/m², nm/cycle | 12.1 | 9.8 |
| Fatigue Crack Propagation Rate @ 1000 J/m², nm/cycle | 415 | 167 |
| Viscosity, Mooney (1+4) at 100°C | 31 | 34 |

As may be seen by the results shown in Table **1**, the rubber composition **E1** having the polyterpene resin can be characterized, quite surprisingly, as having significantly improved physical properties regarding resistance to tear, faulted fatigue and fatigue crack propagation rate when compared to the witness rubber composition that had no polyterpene resin. Furthermore, and again quite surprisingly, these results were achieved with a reduction of plasticizing oil in the rubber compositions.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. Use of a cushion gum for bonding a tire tread to a tire carcass, the cushion gum comprising:
a highly unsaturated diene rubber; and between 5 and 60 phr of a plasticizing hydrocarbon resin having a glass transition temperature greater than 20 °C and a number average molecular weight less than 2000, said plasticizing hydrocarbon resin is an homopolymer or copolymer of terpene.

2. Use of a cushion gum according to claim 1, wherein the terpene resin comprises units resulting from the polymerization of limonene, alpha pinene, beta pinene or combinations thereof.

3. Use of a cushion gum according to claim 1, wherein the terpene resin is selected from copolymers of cyclopentadiene, dicyclopentadiene, styrene and combinations thereof.

4. Use of a cushion gum according to claim 1, wherein the glass transition temperature of the resin is greater than 60 °C.

5. Use of a The cushion gum according to claim 1, wherein the glass transition temperature of the resin is greater than 70 °C.

6. Use of a cushion gum according to claim 1, wherein the cushion gum includes between 10 and 30 phr of the resin.

7. A method for bonding a tread to a tire, comprising:
applying the cushion gum as defined into claim 1 to a bonding surface of a tread band, to an outer bonding surface of a tire carcass or combinations thereof;
placing the bonding surface of the tread band onto the outer bonding surface of a tire carcass with the cushion gum therebetween.

8. The method according to claim 7, wherein the tread band is uncured when performing the step of placing the bonding surface of the tread band onto the outer bonding surface of the tire carcass, the method further comprising:
curing the cushion gum after the step of placing the bonding surface of the tread band onto the outer bonding surface of the tire carcass with the cushion gum therebetween.

9. A tire, comprising:
a tread bonded to a tire carcass by a layer of the cushion gum as defined into claim 1.

## Patentansprüche

1. Verwendung eines Doubliergummis zum Verkleben einer Reifenlauffläche mit einer Reifenkarkasse, wobei der Doubliergummi Folgendes umfasst: einen hoch ungesättigten Dien-Kautschuk; und zwischen 5 und 60 phr eines weichmachenden Kohlenwasserstoffharzes mit einer Glasübergangstemperatur größer als 20°C und einem zahlengemittelten Molekulargewicht kleiner als 2000, wobei das weichmachende Kohlenwasserstoffharz ein Homopolymer oder Copolymer von Terpen ist.

2. Verwendung eines Doubliergummis nach Anspruch 1, wobei das Terpenharz Einheiten umfasst, die aus der Polymerisation von Limonen, α-Pinen, β-Pinen oder Kombinationen davon resultieren.

3. Verwendung eines Doubliergummis nach Anspruch 1, wobei das Terpenharz aus Copolymeren von Cyclopentadien, Dicyclopentadien, Styrol und Kombinationen davon ausgewählt ist.

4. Verwendung eines Doubliergummis nach Anspruch 1, wobei die Glasübergangstemperatur des Harzes größer ist als 60°C.

5. Verwendung eines Doubliergummis nach Anspruch 1, wobei die Glasübergangstemperatur des Harzes größer ist als 70°C.

6. Verwendung eines Doubliergummis nach Anspruch 1, wobei der Doubliergummi zwischen 10 und 30 phr des Harzes aufweist.

7. Verfahren zum Verkleben einer Lauffläche mit einem Reifen, mit den folgenden Schritten:
Aufbringen des Doubliergummis nach Anspruch 1 auf eine Klebefläche eines Reifenprofils, auf eine äußere Klebefläche einer Reifenkarkasse oder Kombinationen davon;
Platzieren der Klebefläche des Reifenprofils auf der äußeren Klebefläche einer Reifenkarkasse mit dem Doubliergummi dazwischen.

8. Verfahren nach Anspruch 7, wobei das Reifenprofil bei Durchführung des Schrittes des Platzierens der Klebefläche des Reifenprofils auf der äußeren Klebefläche der Reifenkarkasse ungehärtet ist, wobei das Verfahren des weiteren folgenden Schritt umfasst:
Härten des Doubliergummis nach dem Schritt des Platzierens der Klebefläche des Reifenprofils auf der äußeren Klebefläche der Reifenkarkasse mit dem Doubliergummi dazwischen.

9. Reifen, der Folgendes umfasst:
eine Lauffläche, die durch eine Lage des Doubliergummis nach Anspruch 1 mit einer Reifenkarkasse verklebt ist.

## Revendications

1. Utilisation d'une gomme de liaison pour coller une bande de roulement sur une carcasse de pneumatique, la gomme de liaison comprenant : un caoutchouc diénique hautement insaturé, et entre 5 et 60 pcc (parties en poids pour cent parties en poids de caoutchouc) d'une résine hydrocarbonée plastifiante ayant une température de transition vitreuse supérieure à 20 °C et une masse moléculaire moyenne en nombre inférieure à 2000, ladite résine hydrocarbonée plastifiante étant un homopolymère ou un copolymère de terpène.

2. Utilisation d'une gomme de liaison selon la revendication 1, dans laquelle la résine terpénique comprend des motifs résultant de la polymérisation du limonène, de l'alpha-pinène, du bêta-pinène ou de leurs combinaisons.

3. Utilisation d'une gomme de liaison selon la revendication 1, dans laquelle la résine terpénique est sélectionnée parmi les copolymères de cyclopentadiène, de dicyclopentadiène, de styrène et leurs combinaisons.

4. Utilisation d'une gomme de liaison selon la revendication 1, dans laquelle la température de transition vitreuse de la résine est supérieure à 60 °C.

5. Utilisation d'une gomme de liaison selon la revendication 1, dans laquelle la température de transition vitreuse de la résine est supérieure à 70 °C.

6. Utilisation d'une gomme de liaison selon la revendication 1, dans laquelle la gomme de liaison comprend entre 10 et 30 pcc de la résine.

7. Procédé de collage d'une bande de roulement sur un pneumatique, comprenant :
l'application de la gomme de liaison telle que définie dans la revendication 1 sur une surface de collage d'une bande de roulement, sur une surface de collage extérieure d'une carcasse de pneumatique ou leurs combinaisons ;
la pose de la surface de collage de la bande de roulement sur la surface de collage extérieure d'une carcasse de pneumatique, avec la gomme de liaison placée entre elles.

8. Procédé selon la revendication 7, dans lequel la bande de roulement est non vulcanisée pendant l'étape de pose de la surface de collage de la bande de roulement sur la surface de collage extérieure de la carcasse de pneumatique, le procédé comprenant en outre :
la vulcanisation de la gomme de liaison après l'étape de pose de la surface de collage de la bande de roulement sur la surface de collage extérieure de la carcasse de pneumatique avec la gomme de liaison placée entre elles.

9. Pneumatique comprenant :
une bande de roulement collée sur une carcasse au moyen d'une couche de la gomme de liaison telle que définie dans la revendication 1.
